# EUROPÄISCHE PATENTSCHRIFT

(11) **EP 2 414 697 B1**
(45) Veröffentlichungstag und Bekanntmachung des Hinweises auf die Patenterteilung: **23.01.2013**
(21) Anmeldenummer: 10774137.3
(22) Anmeldetag: 25.10.2010
(51) Int. Cl.: F16D 65/12

(54) **BREMSSCHEIBE**
BRAKE DISK
DISQUE DE FREIN

(30) Priorität: 02.11.2009 DE 202009014768 U
(43) Veröffentlichungstag der Anmeldung: 08.02.2012
(73) Patentinhaber: Faiveley Transport Witten GmbH, 58454 Witten (DE)
(72) Erfinder: BRAEKER, Tobias, 58313 Herdecke (DE); MEHLAN, Andreas, 59425 Unna (DE); RUPPERT, Helmut, 42857 Remscheid (DE); KNAUP, Klaus, 45476 Mühlheim/Ruhr (DE)
(74) Vertreter: Richter Werdermann Gerbaulet Hofmann
(86) Internationale Anmeldenummer: PCT/EP2010/006505
(87) Internationale Veröffentlichungsnummer: WO 2011/050933

(56) Entgegenhaltungen:
- DE-A1- 3 114 995
- DE-A1-102008 003 873
- FR-A- 1 287 967

## Beschreibung

### Technisches Gebiet

Die Erfindung betrifft eine Bremsscheibe insbesondere für Scheibenbremsen insbesondere für Räder, nach dem Oberbegriff von Anspruch 1.

### Stand der Technik

Bremsscheiben von Rädern sind im Stand der Technik hinlänglich bekannt. Die Bremsscheiben werden bei einem Bremsvorgang unterschiedlichen Einflüssen ausgesetzt. Grundsätzlich unterliegen sie der Fliehkraft aufgrund der Drehung beispielsweise des Rades, an welchem die Bremsscheibe angebracht ist und welches mittels der Bremsscheibe abgebremst werden soll.

Darüber hinaus wird die Bremsscheibe beim Bremsvorgang bremsmomentbeaufschlagt und sie steht unter dem Einfluss von Stößen durch den Reibschluss zwischen Bremsbelägen und der Bremsscheibe, die durch die Bremsscheibensegmente übertragen werden.

Weiterhin steht die Bremsscheibe unter dem Einfluss von Zustellkräften, die beim Bremsvorgang im Wesentlichen axial auf die Bremsscheibe wirken. Weiterhin ist es bekannt, dass aufgrund der Reibung zwischen Bremsscheibe und Bremsbelägen eine nicht unerhebliche Reibleistung verursacht wird, welche in eine zum Teil sehr erhebliche thermische Belastung der Bremsscheibe führt. Durch die thermische Belastung der Bremsscheibe wird die Bremsscheibe auf erhebliche Temperaturen erhitzt, was bis zum Rotglühen der Bremsscheibe führen kann. Durch diesen erheblichen Energieeintrag und durch die damit verbundene Temperaturerhöhung erfährt die Bremsscheibe selbst auch eine erhebliche thermische Ausdehnung. Dies kann neben der thermischen Ausdehnung der Bremsscheibe auch zu einer konischen Aufstellung der Bremsscheibe führen, was vorteilhaft zu vermeiden oder zumindest zu minimieren gilt, weil dies die Funktionsweise der Bremsscheibe reduziert.

Die EP 1 682 791 B1 offenbart eine Bremsscheibe, bei welcher ein Reibring mittels Klemmschrauben an einer Nabe oder einer Befestigungsscheibe befestigbar ist, wobei zur Verdrehsicherung und zur Zentrierung Gleitelemente in Radialnuten geführt sind.

Die DE 38 14 614 A1 offenbart eine Wellenbremsscheibe für Schienenfahrzeuge mit einem Reibring, welcher mittels Durchgangsschrauben mit der Nabe verbunden sind, wobei sich die Durchgangsschrauben durch Bohrungen am Außenumfang der Nabe und durch Bohrungen an am Innenumfang des Reibrings befindlichen Haltelaschen erstrecken. Weiterhin sind Gleitsteine vorgesehen, die radial beweglich angeordnet sind. Dies soll bei jeder thermischen Belastung eine Zentrierung des Reibrings herbeiführen.

Die WO 01/96758 A1 offenbart eine Bremsscheibe für eine Scheibenbremse, bei welchem ein Bremsring mit einem Nabenflansch mit Schrauben verbunden wird. Dabei treten ebenfalls Wärmedehnungen auf zwischen dem Bremsring und dem Nabenkörper, weil der Bremsring sich bei einer Bremsung stark erwärmt, während der Nabenkörper weniger stark erwärmt wird. Um bei einer Wärmedehnung eine Achsparallelität von Schrauben zu gewährleisten, wird vorgeschlagen, dass ein Halteelement angeordnet ist, welches am Nabenkörper fixiert ist und durch welches das Ende der Schrauben nach deren Durchtritt durch den Bremsringflansch gehalten werden kann. Dabei ist das Halteelement als Winkelelement ausgebildet.

Die EP 0683 331 B1 offenbart eine Bremsscheibe für Schienenfahrzeuge, mit zu beiden Seiten des Rades angeordneten Reibringen, welche beabstandet angeordnet sind, wobei die Reibringe mittels Schrauben gehalten sind, die durch das Rad hindurchgreifen und wobei weiterhin Gleitsteine vorgesehen sind, mittels welchen die Reibringe an der Radscheibe radial geführt sind, wobei die Gleitsteine als zu beiden Seiten der Radscheibe wirkende Doppelgleitsteine gebildet sind, welche jeweils einen die Radscheibe durchsetzenden zylindrischen Körper aufweisen. Die Gleitsteine zentrieren somit die beiden an den gegenüberliegenden Seiten der Radscheibe angeordneten Reibringe. Dies hat den Nachteil, dass bei fehlerhaften Gleitsteinen beide Reibringe dem Fehler ausgesetzt sind und bei einem Austausch eines Gleitsteins beide Reibringe tangiert sind.

Die FR 1 287 967 A beschreibt eine Bremsscheibe, die mit Hilfe von Gleitsteinen und Führungen zentrierbar ist. Diese Lösung nutzt einen zylindrischen ersten Bereich, der in eine Öffnung des Rads einsetzbar ist und einen zweiten Bereich, welcher planparallele Seitenflächen aufweist, welche mit planparallelen Flächen der Bremsscheibe zusammenwirken, um die Bremsscheibe am Rad in radialer Richtung zu zentrieren. Die Bremsscheibe weist Kühlrippen auf.

### Darstellung der Erfindung: Aufgabe, Lösung, Vorteile

Es ist die Aufgabe der Erfindung, eine Bremsscheibe zu schaffen, welche in Bezug auf eine Zentrierung bzw. Lagerung durch Gleitsteine gegenüber dem Stand der Technik verbessert ist.

Die wird erreicht mit den Merkmalen von Anspruch 1. Dadurch wird erreicht, dass beidseits des Rads Gleitsteine einsetzbar sind, die einfach aufgebaut und leicht austauschbar sind. Insbesondere ist es vorteilhaft, wenn die Gleitsteine jeweils von der Seite in die Öffnung des Rads einsetzbar sind, auf welcher die zu zentrierende Bremsscheibe angeordnet ist.

Gemäß des erfindungsgemäßen Gedankens ist vorgesehen, dass die Zentriermittel Gleitsteine sind, welche in die Öffnungen des Rads einsetzbar sind und in entsprechende Aufnahmen der Bremsscheibe eingreifen.

Die Aufnahmen der Zentriermittel sind in der Bremsscheibe stufenförmig ausgebildet und lassen zwischen dem Zentriermittel und der Rückseite der Reibfläche der Bremsscheibe einen Kanal frei. Dadurch wird insbesondere eine verbesserte Kühlung der Bremsscheibe erzielt, wobei der Kanal zur Kühlung dient und Luft durch den Kanal strömen kann. Weiterhin ist eine stufenförmige Aufnahme der Bremsscheibe zwischen zwei Kühlrippen vorgesehen. So kann ein verbesserter Kühleffekt erreicht werden.

Weitere vorteilhafte Ausführungen der Erfindung ergeben sich aus den Unteransprüchen.

Nach einer vorteilhaften Ausführungsform der Erfindung sind die Gleitsteine derart über den Umfang der Bremsscheibe verteilt angeordnet, dass sie gleich verteilt sind. Dies verursacht eine Reduzierung oder Aufhebung von Unwucht. Vorteilhaft ist die Anordnung von zumindest drei Gleitsteinen.

Dabei ist es zweckmäßig, wenn die Gleitsteine jeweils zwischen zwei Befestigungsmitteln angeordnet sind. Dadurch kann eine vorteilhafte Wirkung erzielt werden, weil eine ideale Kraftverteilung erreicht wird.

Vorteilhaft ist es, wenn die mit den planparallelen Flächen der Gleitsteine zusammenwirkenden planparallelen Flächen der Bremsscheibe als Seitenflächen von Kühlrippen der Bremsscheibe ausgebildet sind. Dies bewirkt, dass keine zusätzlichen Teile oder Vorsprünge vorgesehen werden müssen, was das Gewicht weiter erhöhen würde.

Vorteilhaft ist weiterhin, wenn die zylindrischen ersten Bereiche der Gleitsteine hohlzylindrisch oder massiv zylindrisch ausgebildet sind. Bei der Ausbildung von hohlzylindrischen Bereichen wird ebenfalls ein Gewichtsvorteil und Stabilitätsvorteil erzielt.

Auch ist es zweckmäßig, wenn die zweiten Bereiche der Gleitsteine, welche die planparallelen Seitenflächen aufweist, als rechteckige oder quadratische Platte ausgebildet ist, die am Ende des zylindrischen Bereichs angeordnet ist.

Gemäß einer weiteren bevorzugten Ausführung weist der Trägev auf zur Aufnahme der Befestigungsmittel und der Zentriermittel, wobei die Anzahl der Öffnungen für die Aufnahme der Befestigungsmittel höher ist als die Anzahl der Öffnungen für die Aufnahme der Zentriermittel. Dadurch wird erreicht, dass insbesondere auch bei segmentierten Bremsscheiben eine Fehlmontage der Bremsscheibe oder der Bremsscheibensegmente vermieden werden kann. Dabei ist es insbesondere vorteilhaft, wenn die Anzahl der Öffnungen für die Aufnahme der Befestigungsmittel doppelt so hoch ist als die Anzahl der Öffnungen für die Aufnahme der Zentriermittel. Bei einem weiteren Ausführungsbeispiel ist es zweckmäßig, wenn die Anzahl der Öffnungen für die Aufnahme der Befestigungsmittel dreifach so hoch ist als die Anzahl der Öffnungen für die Aufnahme der Zentriermittel. Besonders vorteilhaft ist es, wenn die Öffnungen für die Aufnahme der Zentriermittel zwischen den Öffnungen zur Aufnahme der Befestigungsmittel angeordnet sind.

Besonders vorteilhaft ist es, wenn die bevorzugt stufenförmige Aufnahme der Bremsscheibe zwischen zwei Kühlrippen durch materialabtragende Bearbeitung eingebracht ist. Insbesondere ist es zweckmäßig, wenn die materialabtragende Bearbeitung der Vorgang des Fräsens ist.

Weitere Vorteile werden in den Unteransprüchen und in der nachfolgenden Figurenbeschreibung beschrieben.

### Kurze Beschreibung der Zeichnungen

Nachstehend wird die Erfindung auf der Grundlage eines Ausführungsbeispiels anhand der Zeichnungen näher erläutert. Es zeigen in rein schematischer Darstellung:
Fig. 1 in einer Teilschnittansicht eine Bremsscheibe,
Fig. 2 in einer Teilschnittansicht eine Bremsscheibe,
Fig. 3 eine Ansicht eines Ausschnitts eines Reibrings von der Rückseite,
Fig. 4 eine Teilschnittansicht einer Bremsscheibe,
Fig. 5 eine Teilansicht eines Rads mit Befestigungselementen und einem Zentrierelement,
Fig. 6 eine Teilschnittansicht einer Bremsscheibe,
Fig. 7 eine Vergrößerung eines Ausschnitts der Figur 6,
Fig. 8 eine Teilschnittansicht einer Bremsscheibe,
Fig. 9 eine Vergrößerung eines Ausschnitts der Figur 8, und
Fig. 10 eine Teilansicht eines Rads mit Befestigungselementen und einem Zentrierelement.

### Bevorzugte Ausführung der Erfindung

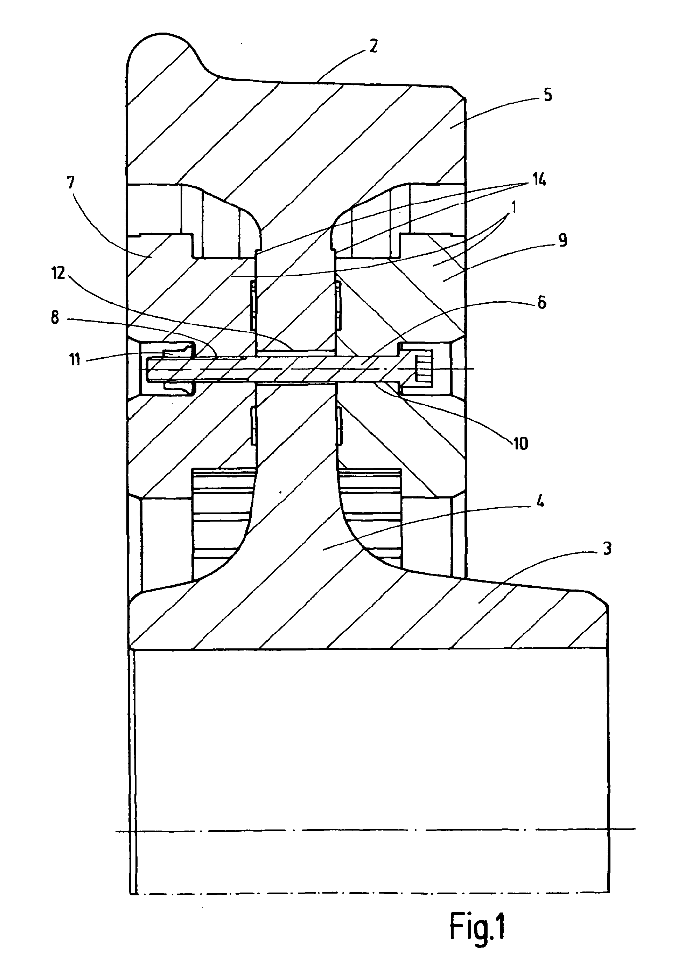

Die Figur 1 zeigt eine Bremsscheibe 1, wie sie an einem Rad 2 oder an einer Befestigungsscheibe beispielsweise eines Schienenfahrzeugs befestigt ist. Die Bremsscheibe ist wie in Figur 1 gezeigt vorzugsweise beidseitig des Rads als Träger angeordnet. Vorzugsweise ist die Bremsscheibe 1 einteilig ausgebildet. Bei einem anderen Ausführungsbeispiel kann die Bremsscheibe 1 dabei auch aus zumindest einem segmentierten Bremsring bestehen, so dass sie als Scheibe in sich direkt gegenüberliegenden oder beidseitig des Trägers angeordneten Segmenten zusammengesetzt ist.

Das Rad 2 oder die Befestigungsscheibe als Träger besteht vorzugsweise aus einer Radnabe 3 und einem radial sich erstreckenden und vorzugsweise auch axial schmalen Mittelbereich 4 und einem sich radial außen anschließenden auch in axialer Richtung ausgedehnten Bereich 5.

Die Bremsscheibe 1 ist vorzugsweise im Bereich des axial schmalen Mittelbereichs 4 mit dem Rad 2 bzw. der Befestigungsscheibe als Träger verbunden. Die Bremsscheibe oder die Segmente der Bremsscheibe 1 sind mittels Schrauben 6 oder anderen Verbindungsmitteln mit dem Rad 2 bzw. mit der Befestigungsscheibe bzw. mit dem jeweils gegenüberliegenden Segment verbunden. Durch Verbindung der beiden sich gegenüberliegenden Bremsscheiben können die beiden Bremsscheiben an dem Träger dadurch fixiert werden, dass sie den Träger zwischen sich verspannen.

Dabei wird die Schraube 6 in axialer Richtung von einer Seite durch eine Öffnung 8 Bremsscheibe 1 durchgeführt und auf der anderen Seite des mittleren Mittelbereichs 4 ebenso durch der dort angeordneten Bremsscheibe und durch eine diesbezüglich vorgesehene Öffnung 10 durchgeführt und mittels einer Mutter 11 verschraubt und gesichert.

Auf der Rückseite der Bremsscheiben 7,9 sind Kühlrippen 14 vorgesehen, welche dazu dienen, die Kühlung der Bremsscheibe zu verbessern, indem auch an der Rückseite der Bremsscheibe 7,9 Luft vorbei strömen kann. Dadurch wird erreicht, dass thermische Effekte nicht so starke Auswirkungen haben, weil eine effektivere Kühlung vorliegt.

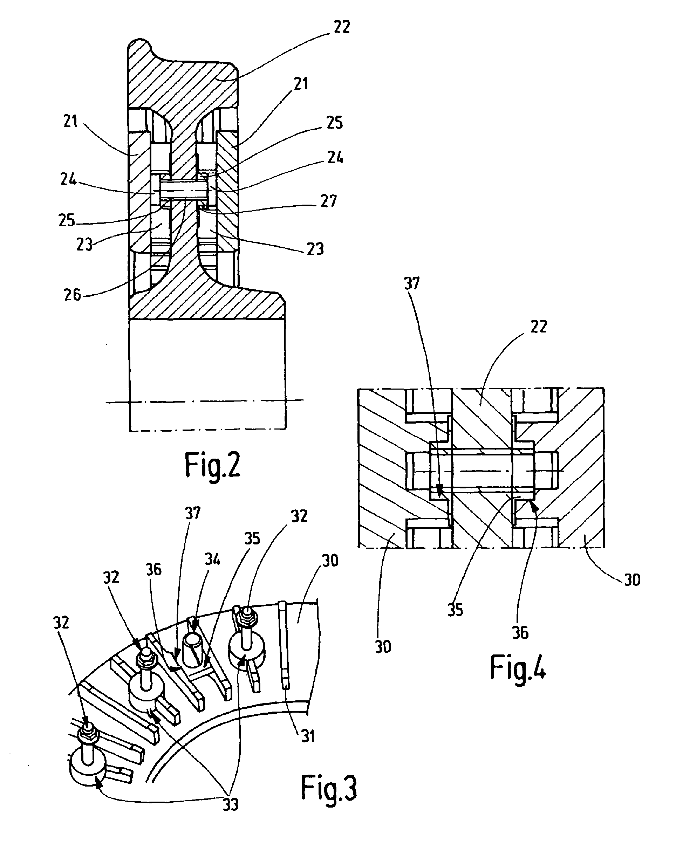

Die Figur 2 zeigt ein weiteres Ausführungsbeispiel einer Bremsscheibe 21, wie sie an einem Rad 22 befestigt ist. Die Bremsscheibe 21 ist beidseitig des Rads 22 als Träger angeordnet. Vorzugsweise ist auch die Bremsscheibe 21 einteilig ausgebildet. Bei einem weiteren Ausführungsbeispiel kann die Bremsscheibe 21 auch aus zumindest einem segmentierten Bremsring bestehen.

Wie in Figur 2 zu erkennen ist, weist die Bremsscheibe 21 axial nach innen in Richtung auf das Rad 22 hervorstehende Kühlrippen 23 auf, die vorzugsweise gerade ausgebildet sind und radial ausgerichtet sind. Die Kühlrippen liegen vorzugsweise an Gegenflächen des Rads an oder sind davon nur wenig beabstandet. Vorzugsweise weist die Bremsscheibe eine Ausnehmung 24 auf, in welche ein Gleitstein 25 eingreifen kann, um die Bremsscheibe 21 zu zentrieren.

Die Figur 2 zeigt, dass das Rad 22 im Bereich eines Gleitsteins 25 eine Öffnung aufweist, in welches von beiden Seiten jeweils ein Gleitstein 25 eingesetzt ist, wobei der Gleitstein 25 aus einem zylindrischen Element 26 besteht, welches in die Öffnung des Rads einsetzbar ist und einem vorstehenden Rand 27, welcher vor der Öffnung zu liegen kommt. Vorzugsweise ist das zylindrische Element 26 hohlzylindrisch.

Bevorzugt bilden die Gleitsteine, auch Kulissensteine genannt, eine flache Struktur, die in eine Öffnung des Rads eingreift und zum Teil darüber hinaus heraussteht. Der herausstehende Teil 27 des Gleitsteins bildet planparallele Führungsflächen, an welchen sich entsprechend ausgebildete Gegenflächen der Bremsscheibe abstützen und dadurch zentriert werden. Dadurch wird eine radiale Führung der Bremsscheibe erreicht.

Die Figur 3 zeigt einen Ausschnitt einer Bremsscheibe 30 von der Seite, die dem Rad gegenüber liegt. Deutlich zu erkennen sind die Kühlrippen 31 auf der Rückseite der Bremsscheibe 30 und die Schrauben 32, die durch Öffnungen durch die Bremsscheibe 30 geführt sind, um die Bremsscheibe an dem Rad zu befestigen. Wie zu erkennen ist, sind über den Umfang der Bremsscheibe 30 verteilt mehrere Schrauben 32 verteilt. Die Schrauben 32 sind in einem Bereich der Bremsscheibe durch Öffnungen geführt, die zylindrisch hervorstehen und die zur Anlage mit dem Rad bzw. mit dazu vorgesehenen Gegenflächen bestimmt sind.

Zwischen zwei Kühlrippen 31 ist ein zylindrisches Element 34 zu erkennen, welches einen Gleitstein darstellt. Dieser wird wie in Figur 2 dargestellt, in eine nicht dargestellte Bohrung des Rads von einer Seite eingeführt. Auf dem zylindrischen Element 34 steckt auf der Bremsscheibe 30 zugewandten Seite ein rechteckiger oder quadratischer Bereich 35 mit planparallelen Seitenflächen 36, der zur Führung der Bremsscheibe 30 dient. Die Bremsscheibe weist dazu zwischen zwei Kühlrippen sich gegenüberliegende planparallele Flächen 37 auf, die mit den planparallelen Flächen der Gleitsteins zusammen wirken und die Bremsscheibe zentrieren und in radialer Richtung führen. Die Figur 4 zeigt dies im Schnitt noch einmal.

Durch die Ausgestaltung der Gleitsteine bzw. Kulissensteine als etwa "pilzförmige" Elemente, die einen im Wesentlichen zylindrischen Bereich aufweisen, der in eine Öffnung des Rads eingeschoben wird und die an ihrem anderen Ende eine Art Vergrößerung aufweist mit planparallelen Flächen, wird ein Gleitstein geschaffen, welcher mit planparallelen Gegenflächen der Reibfläche zusammen wirkt, um die Reibfläche an dem Rad zu zentrieren.

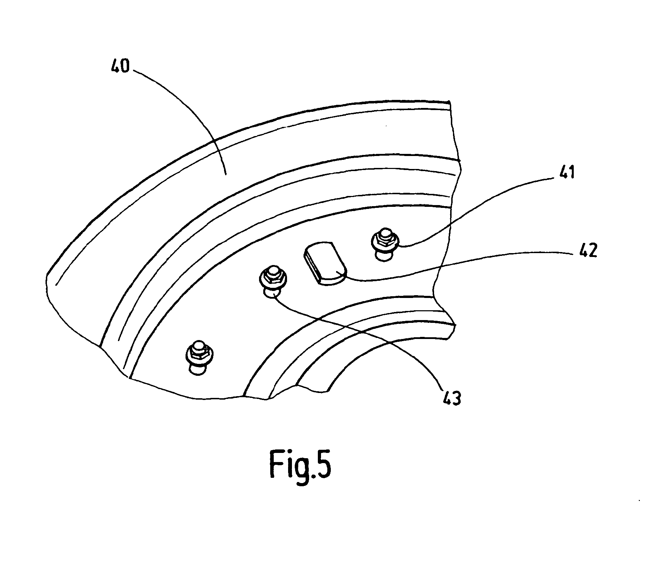

Die Figur 5 zeigt schematisch eine Ansicht eines Rads 40 mit Befestigungsmitteln 41 und Zentriermitteln 42. Die Befestigungsmittel 41 sind als durch Öffnungen 43 durchgreifende Schrauben mit Muttern dargestellt. Die Zentriermittel 42 sind als plattenförmige Elemente ausgebildet, die einen im Wesentlichen zylindrischen Bereich aufweisen, welcher in Figur 5 nicht dargestellt ist und in eine Öffnung des Rads hinein ragt.

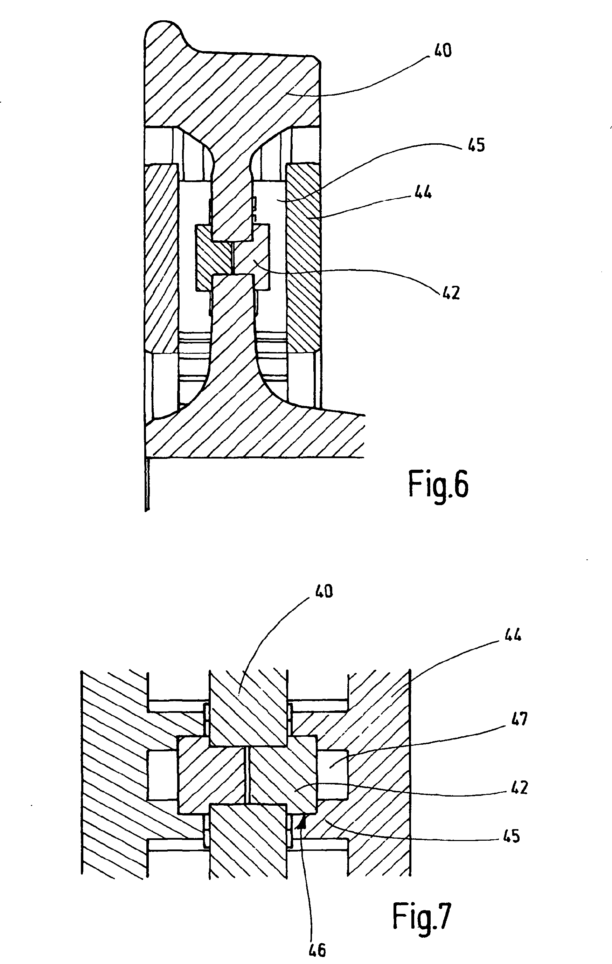

Wie in Figur 6 und in Figur 7 zu erkennen ist, weist die Bremsscheibe 44 axial nach innen in Richtung auf das Rad 40 hervorstehende Kühlrippen 45 auf, die vorzugsweise gerade und in radialer Richtung ausgerichtet ausgebildet sind. Sie können aber auch anderweitig gestaltet sein. Die Kühlrippen liegen vorzugsweise an Gegenflächen des Rads 40 an oder sind davon nur wenig beabstandet.

Die Bremsscheibe 44 weist eine Ausnehmung 46 auf, in welche ein Gleitstein 42 eingreifen kann, um die Bremsscheibe 44 zu zentrieren. Dabei ist die Öffnung zwischen zwei Kühlrippen 45 vorgesehen.

Bevorzugt ist gemäß einem weiteren Erfindungsgedanken zwischen dem Gleitstein 42 und der Bremsscheibe zwischen den Kühlrippen ein Kanal 47 vorgesehen, welcher zur Kühlung dient und Kühlluft an der Rückseite der Bremsscheibe vorbei streichen lässt.

Erfindungsgemäß dienen die Kühlrippen 45 der Aufnahme der Zentriermittel 42 in der Bremsscheibe 44.

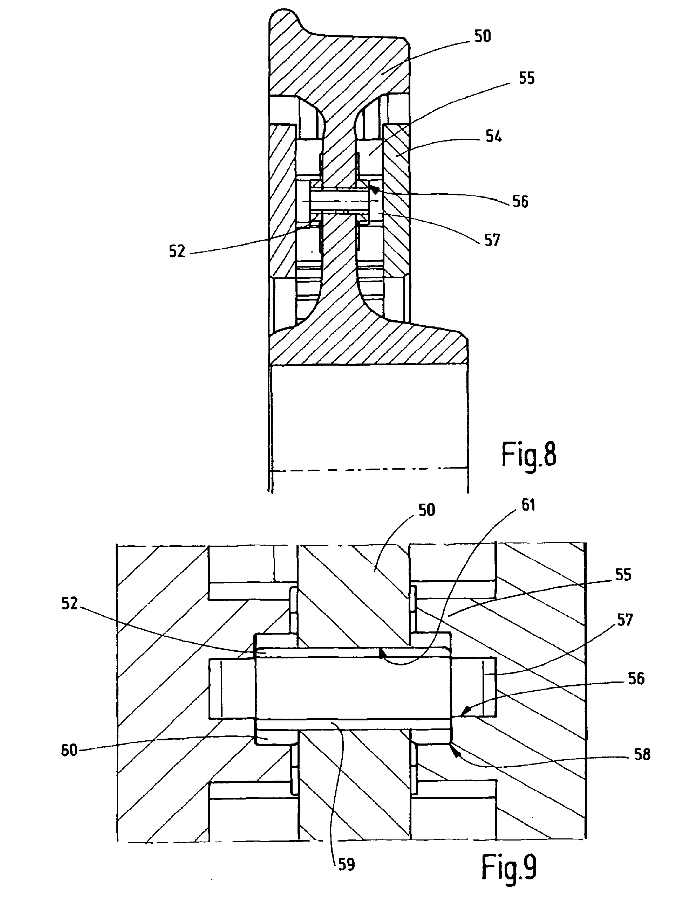

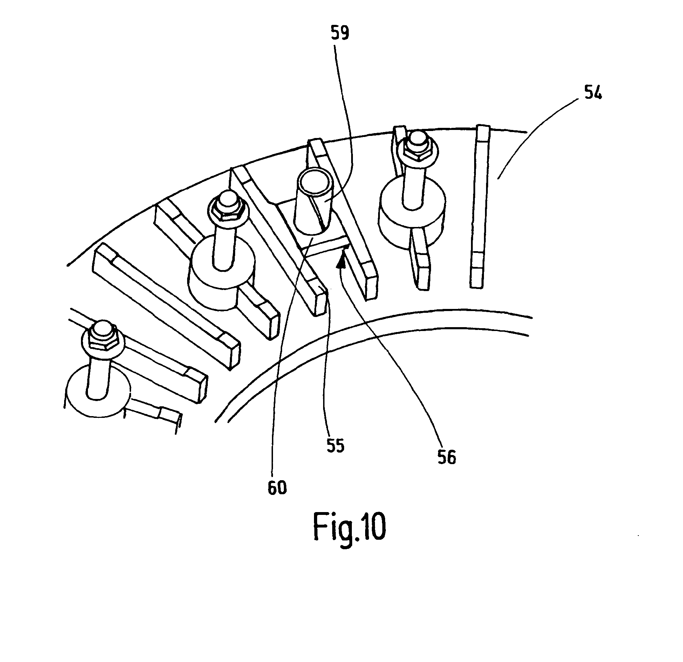

Wie in den Figuren 8, 9 und 10 zu erkennen ist, weist auch die Bremsscheibe 54 axial nach innen in Richtung auf das Rad 50 hervorstehende Kühlrippen 55 auf, die vorzugsweise gerade und in radialer Richtung ausgerichtet ausgebildet sind. Sie können aber auch anderweitig gestaltet sein. Die Kühlrippen 55 liegen vorzugsweise an Gegenflächen des Rads 50 an oder sind davon nur wenig beabstandet. Die Bremsscheibe 54 weist eine stufenförmige Struktur oder Ausnehmung 56 auf, in welche ein Gleitstein 52 eingreifen kann, um die Bremsscheibe 54 zu zentrieren. Dabei ist die Öffnung zwischen zwei Kühlrippen

Erfindungsgemäß ist zwischen dem Gleitstein 52 und der Bremsscheibe zwischen den Kühlrippen ein Kanal 57 vorgesehen, welcher zur Kühlung dient und Kühlluft an der Rückseite der Bremsscheibe vorbei streichen lässt.

Die stufenförmige Struktur oder Ausnehmung 56 ist als Stufe in die beiden gegenüberliegenden Kühlrippen 55 eingearbeitet, so dass der Gleitstein 52 in die Ausnehmung eingreift und dennoch an der ersten Stufe 58 anliegt und den dahinter liegenden Raumbereich als Kühlkanal 57 frei hält.

Vorteilhaft wird die Stufe 58 mit den Anlageflächen für den Gleitstein 52 durch Fräsen eingebracht, wobei die radialen Führungsflächen für den Kontakt mit dem Gleitstein dabei erzeugt werden.

Der Gleitstein 52 wird vorteilhaft aus einer im Wesentlichen zylindrischen Röhre 59 oder Buchse gebildet, auf welche endseitig ein Kragen 60 aufgebracht wird. Vorteilhaft ist die Röhre 59 zweiteilig ausgebildet und kann beiderseitig in die dafür vorgesehene Öffnung 61 des Rads 50 eingebracht werden. Alternativ könnte die Röhre 59 auch durchgängig sein, wobei dass die Kragen 60 auf die Röhre 59 aufgeschoben werden müssten.

### Bezugszeichenliste

- 1: Bremsscheibe
- 2: Rad
- 3: Radnabe
- 4: Mittelbereich
- 5: Radial außen liegender Bereich
- 6: Befestigungsmittel, Schraube
- 7: Segment
- 8: Öffnung
- 9: Segment
- 10: Öffnung
- 11: Mutter
- 12: Öffnung
- 13: Kulissenstein
- 14: Kühlrippe
- 21: Bremsscheibe
- 22: Rad
- 23: Kühlrippe
- 24: Ausnehmung
- 25: Gleitstein, Kulissenstein
- 26: zylindrisches Element
- 27: vorstehender Rand
- 30: Bremsscheibe
- 31: Kühlrippe
- 32: Schraube
- 33: zylindrisch vorstehender Bereich
- 34: zylindrisches Element
- 35: quadratischer Bereich
- 36: Seitenfläche
- 37: planparallele Flächen
- 40: Rad
- 41: Befestigungsmittel
- 42: Zentriermittel
- 43: Öffnung
- 44: Bremsscheibe
- 45: Kühlrippe
- 46: Ausnehmung
- 47: Kanal
- 50: Rad
- 52: Gleitstein
- 54: Bremsscheibe
- 55: Kühlrippe
- 56: Ausnehmung
- 57: Kanal
- 58: Stufe
- 59: Röhre
- 60: Kragen
- 61: Öffnung

## Patentansprüche

1. Bremsscheibe (1), welche bevorzugt einseitig oder beiderseits eines Trägers, wie eines Rads (2), anordenbar ist und mittels über den Umfang der Bremsscheibe (1) verteilten Befestigungsmitteln (6) an dem Träger gegenüberliegend befestigbar ist,
wobei über den Umfang der Bremsscheibe verteilt Gleitsteine (25) zur Zentrierung der Bremsscheibe am Träger vorgesehen sind,
wobei die Gleitsteine (25) einen zylindrischen ersten Bereich (26) aufweisen, der in eine Öffnung des Trägers einsetzbar ist und einen zweiten Bereich (27) aufweisen, welcher planparallele Seitenflächen aufweist, welche mit planparallelen Flächen (37) von Ausnehmungen (56) der Bremsscheibe (1) zusammenwirken, um die Bremsscheibe (1) am Träger in radialer Richtung zu zentrieren,
und wobei die Ausnehmungen (56) jeweils zwischen zwei Kühlrippen (45) der Bremsscheibe (1) vorgesehen sind,
**dadurch gekennzeichnet, dass**
die Ausnehmungen (56) der Bremsscheibe (1) stufenförmig ausgebildet sind, mit Stufen (58), die axiale Anlageflächen für die Gleitsteine (52) bilden,
wobei bei Anlage der Gleitsteine (52) an den Stufen (58) zwischen den Gleitsteinen (52) und der Rückseite der Reibfläche der Bremsscheibe (1) Kanäle (47) frei bleiben, so dass die Kanäle (47) zur Kühlung dienen und Luft durch die Kanäle (47) strömen kann.

2. Bremsscheibe nach Anspruch 1, **dadurch gekennzeichnet, dass** die Gleitsteine (25) jeweils von der Seite in die Öffnung des Trägers einsetzbar sind, auf welcher die zu zentrierende Bremsscheibe (1) angeordnet ist.

3. Bremsscheibe nach einem der vorhergehenden Ansprüche, **dadurch gekennzeichnet, dass** die Gleitsteine (25) derart über den Umfang der Bremsscheibe verteilt angeordnet sind, dass sie gleich verteilt sind.

4. Bremsscheibe nach einem der vorhergehenden Ansprüche, **dadurch gekennzeichnet, dass** die Gleitsteine (25) jeweils zwischen zwei Befestigungsmitteln (41) angeordnet sind.

5. Bremsscheibe nach einem der vorhergehenden Ansprüche, **dadurch gekennzeichnet, dass** die mit den planparallelen Fläche (37) der Gleitsteine (25) zusammenwirkenden planparallelen Flächen der Bremsscheibe als Seitenflächen von Kühlrippen der Bremsscheibe ausgebildet sind.

6. Bremsscheibe nach einem der vorhergehenden Ansprüche, **dadurch gekennzeichnet, dass** die zylindrischen ersten Bereiche der Gleitsteine (25) hohlzylindrisch oder massiv zylindrisch ausgebildet sind.

7. Bremsscheibe nach einem der vorhergehenden Ansprüche, **dadurch gekennzeichnet, dass** die zweiten Bereiche der Gleitsteine (25), welche die planparallelen Seitenflächen (37) aufweist, als rechteckige oder quadratische Platte ausgebildet ist, die am Ende des zylindrischen Bereichs angeordnet ist.

8. Träger mit Bremsscheibe nach einem der vorhergehenden Ansprüche, **dadurch gekennzeichnet, dass** der Träger Offnungen aufweist zur Aufnahme der Befestigungsmittel und der Zentriermitte(42), wobei die Anzahl der Öffnungen für die Aufnahme der Befestigungsmitte (41) höher ist als die Anzahl der Öffnungen für die Aufnahme der Zentriermitte (42) dass die Öffnungen für die Aufnahme von Zentriermitteln (42) zwischen den Öffnungen zur Aufnahme der Befestigungsmittel (41) angeordnet sind, und dass die Zentriermitte(42) Gleitsteine (25) sind, welche in die Öffnungen desTrägers einsetzbar sind und in entsprechende Aufnahmen der Bremsscheibe (1) eingreifen.

9. Bremsscheibe nach einem der vorhergehenden Ansprüche, **dadurch gekennzeichnet, dass** die stufenförmige Ausuehmanjen der Bremsscheibe zwischen zwei Kühlrippen (14) durch materialabtragende Bearbeitung eingebracht ist.

10. Bremsscheibe nach einem der vorhergehenden Ansprüche, **dadurch gekennzeichnet, dass** die materialabtragende Bearbeitung der Vorgang des Fräsens ist.

## Claims

1. A brake disk (1) which can preferably be arranged on one side or both sides of a carrier, such as a wheel (2), and can be fixed opposite the wheel by means of fixing means (6) distributed over the circumference of the brake disk (1), wherein sliding blocks (25) distributed over the circumference of the brake disk are provided for centering the brake disk on the carrier, wherein the sliding blocks (25) have a cylindrical first region (26) which can be inserted into an opening in the wheel, and a second region (27) which has plane-parallel side surfaces which interact with plane-parallel surfaces (37) of recesses (56) of the brake disk (1) in order to center the brake disk (1) in the radial direction on the carrier, and wherein the recesses (56) are each provided between two cooling ribs (45) of the brake disk (1), **characterized in that** the recesses (56) of the brake disk (1) are configured to be step-shaped, with steps (58) which form axial contact surfaces for the sliding blocks (52), wherein upon contact of the sliding blocks (52) on the steps (58) between the sliding blocks (52) and the rear side of the frictional surface of the brake disk (1), channels (47) remain free so that the channels (47) serve for cooling and air can flow through the channels (47).

2. The brake disk according to claim 1, **characterized in that** the sliding blocks (25) can each be inserted from the side into the opening of the carrier on which the brake disk (1) to be centered is arranged.

3. The brake disk according to any one of the preceding claims, **characterized in that** the sliding blocks (25) are arranged distributed over the circumference of the brake disk in such a manner that they are uniformly distributed.

4. The brake disk according to any one of the preceding claims, **characterized in that** the sliding blocks (25) are each arranged between two fixing means (41).

5. The brake disk according to any one of the preceding claims, **characterized in that** the plane-parallel surfaces of the brake disk interacting with the plane-parallel surfaces (37) of the sliding blocks (25) are configured as side surfaces of cooling ribs of the brake disk.

6. The brake disk according to any one of the preceding claims, **characterized in that** the cylindrical first regions of the sliding blocks (25) are configured to be hollow-cylindrical or solid-cylindrical.

7. The brake disk according to any one of the preceding claims, **characterized in that** the second regions of the sliding blocks (25) which have the plane-parallel side faces (37) are configured as a rectangular or square plate which is arranged at the end of the cylindrical region.

8. Carrier with brake disk according to any one of the preceding claims, **characterized in that** the carrier has openings for receiving the fixing means (41) and the centering means (42), wherein the number of openings for receiving the fixing means (41) is higher than the number of openings for receiving the centering means (42), that the openings for receiving centering means (42) are arranged between the openings for receiving the fixing means (41) and that the centering means (42) are sliding blocks (25) which can be inserted in the openings of the carrier and engage in corresponding receptacles of the brake disk (1).

9. The brake disk according to any one of the preceding claims, **characterized in that** the step-shaped recesses (56) of the brake disk between two cooling ribs (14) is introduced by material-removing treatment.

10. The brake disk according to any one of the preceding claims, **characterized in that** the material-removing treatment is the process of milling.

## Revendications

1. Disque de frein (1) qui peut être disposé de préférence d'un côté ou des deux côtés d'un support tel qu'une roue (2) et peut être fixé à l'opposé du support au moyen de moyens de fixation (6) répartis sur la circonférence du disque de frein (1),
des coulisseaux (25) permettant de centrer le disque de frein sur le support et répartis sur la circonférence du disque de frein étant prévus,
les coulisseaux (25) présentant une première partie cylindrique (26) qui peut être insérée dans un orifice du support et une seconde partie (27) qui présente des surfaces latérales parallèles en plan qui coopèrent avec des surfaces parallèles en plan (37) d'échancrures (56) du disque de frein (1) afin de centrer le disque de frein (1) sur le support dans le sens radial
et les échancrures (56) étant pratiquées respectivement entre deux nervures de refroidissement (45) du disque de frein (1),
**caractérisé en ce que**
les échancrures (56) du disque de frein (1) ont une conformation étagée avec des niveaux (58) qui forment les surfaces d'appui axiales pour les coulisseaux (52), sachant que, lors de l'appui des coulisseaux (52) sur les niveaux (58) entre les coulisseaux (52) et l'arrière de la surface de frottement du disque de frein (1), les canaux (47) restent dégagés, de sorte que les canaux (47) servent au refroidissement et que de l'air peut circuler dans les canaux (47).

2. Disque de frein selon la revendication 1, **caractérisé en ce que** les coulisseaux (25) peuvent être insérés respectivement dans l'orifice du support par le côté sur lequel le disque de frein (1) à centrer est disposé.

3. Disque de frein selon une des revendications précédentes, **caractérisé en ce que** les coulisseaux (25) sont disposés répartis sur la circonférence du disque de frein de manière à être répartis régulièrement.

4. Disque de frein selon une des revendications précédentes, **caractérisé en ce que** les coulisseaux (25) sont disposés respectivement entre deux moyens de fixation (41).

5. Disque de frein selon une des revendications précédentes, **caractérisé en ce que** les surfaces parallèles en plan du disque de frein coopérant avec les surfaces parallèles en plan (37) des coulisseaux (25) se présentent sous forme de surfaces latérales des nervures de refroidissement du disque de frein.

6. Disque de frein selon une des revendications précédentes, **caractérisé en ce que** les premières parties cylindriques des coulisseaux (25) ont une conformation cylindrique creuse ou cylindrique massive.

7. Disque de frein selon une des revendications précédentes, **caractérisé en ce que** les secondes parties cylindriques des coulisseaux (25) présentant les surfaces latérales parallèles en plan (37) sont réalisées sous la forme d'une plaque rectangulaire ou quadratique qui est disposée au bout de la partie cylindrique.

8. Support avec disque de frein selon une des revendications précédentes, **caractérisé en ce que** le support présente des orifices destinés à recevoir les moyens de fixation (41) et les moyens de centrage (42), le nombre d'orifices destinés à recevoir les moyens de fixation (41) étant supérieur au nombre d'orifices destinés à recevoir les moyens de centrage (42), que les orifices destinés à recevoir les moyens de centrage (42) sont disposés entre les orifices destinés à recevoir les moyens de fixation (41) et que les moyens de centrage (42) sont des coulisseaux (25) qui peuvent être insérés dans les orifices du support et s'engrènent dans des récepteurs correspondants du disque de frein (1).

9. Support avec disque de frein selon une des revendications précédentes, **caractérisé en ce que** les échancrures de forme étagée (56) du disque de frein sont pratiquées entre deux nervures de refroidissement (10) par usinage par enlèvement de matière.

10. Support avec disque de frein selon une des revendications précédentes, **caractérisé en ce que** l'usinage par enlèvement de matière est l'opération de fraisage.
